# EUROPÄISCHE PATENTSCHRIFT

(11) **EP 0 817 929 B1**
(45) Veröffentlichungstag und Bekanntmachung des Hinweises auf die Patenterteilung: **20.11.2002**
(21) Anmeldenummer: 96909099.2
(22) Anmeldetag: 20.03.1996
(51) Int. Cl.: F16J 15/32

(54) **DICHTUNGSSYSTEM FÜR EINEN REFRIGERATOR**
SEALING SYSTEM FOR A REFRIGERATOR
SYSTEME D'ETANCHEITE POUR REFRIGERATEUR

(30) Priorität: 29.03.1995 DE 29505317 U
(43) Veröffentlichungstag der Anmeldung: 14.01.1998
(73) Patentinhaber: Leybold Vakuum GmbH, 50968 Köln (DE)
(72) Erfinder: SCHILLING, Ernst, D-55286 Wörrstadt (DE); SOUS, Dieter, D-50374 Erftstadt (DE)
(74) Vertreter: Leineweber, Jürgen, Dipl.-Phys.
(86) Internationale Anmeldenummer: EP9601203
(87) Internationale Veröffentlichungsnummer: WO96030677

(56) Entgegenhaltungen:
- EP-A- 0 214 321
- DE-A- 3 602 963
- DE-U- 8 816 254

## Beschreibung

Die vorliegende Erfindung betrifft ein Dichtungssystem für Refrigeratoren. Refrigeratoren sind Tieftemperatur-Kältemaschinen, in denen ein thermodynamischer Kreisprozess abläuft. Ein einstufiger Refrigerator umfaßt einen zylindrischen Arbeitsraum mit einem Verdränger. Dieser ist mit einem elektrischen oder pneumatischen Antrieb gekoppelt und führt während des Betriebs des Refrigerators im Arbeitsraum Hin- und Herbewegungen aus.

Maßgebend für die Effektivität eines Refrigerators ist die Abdichtung des Verdrängers gegenüber der Innenwand seines Arbeitsraumes. Die Abdichtung muß einerseits hohen Dichtheitsanforderungen genügen, um die Strömung des Arbeitsgases durch den in der Regel im Verdränger befindlichen Regenerator sicherzustellen. Andererseits soll die Abdichtung eine möglichst geringe Reibung haben, da mit dieser eine unerwünschte Wärmeentwicklung verbunden ist.

Aus der EP-A-214 321 ist ein Dichtungssystem für Refrigerator-Verdränger bekannt. In einer Nut im Verdränger befinden sich der eigentliche Dichtring (in diesem Fall zwei kolbenringartig gestaltete Dichtringe) und ein Federring. Der Federring dient der Erzeugung einer Vorspannung für den in der Regel aus Polytetrafluoräthylen (PTFE) bestehenden Dichtring. Beim vorbekannten Dicht-System hat sich als nachteilig herausgestellt, daß der Federring nichts zur Erzeugung der gewünschten Abdichtung beiträgt. Zum Stand der Technik gehört deshalb auch eine Lösung, bei der der die Vorspannung erzeugende Ring ein aus Gummi bestehender O-Ring ist. Ein Dichtsystem dieser Art hat wesentlich bessere Dichtungseigenschaften. Bei einem Dichtsystem mit einem Gummi-O-Ring wurde jedoch häufig beobachtet, daß beim Starten eines durchgekühlten Refrigerators (Zustand nach einem mehrstündigen Abschalten des Refrigerators) der Kühlprozess nicht mehr in Gang kam. Das den Refrigerator durchströmende Arbeitsgas war nicht in der Lage, von den zu kühlenden Bereichen Wärme abzuführen; es führte vielmehr Wärme zu, so daß es zu relativ hohen Wärmebelastungen z.B. mit der Folge des Abdampfens von Kältemitteln (Helium, Stickstoff) kam.

Der vorliegenden Erfindung liegt die Aufgabe zugrunde, beim Starten eines durchgekühlten Refrigerators sicherzustellen, daß der Kühlprozess wieder in Gang kommt.

Die Erfindung beruht auf der Erkenntnis, daß das Dichtungssystem zwischen der Wandung des Arbeitsraumes und dem Verdränger - bei einem mehrstufigen Refrigerator in aller Regel das Dichtungssystem in der ersten Stufe - die Ursache für die beobachteten Mängel war. Werkstoffuntersuchungen ergaben, daß der O-Ring nach einer Durchkühlung auf tiefe Temperaturen (ca. -100° C bzw. 170 K) seine Aufgabe, nämlich die Erzeugung einer Vorspannkraft, häufig nicht mehr erfüllen konnte. Insbesondere nach mehreren Abkühlvorgängen reichte die Elastizität des O-Ringes für die Erzeugung der gewünschten Vorspannkraft nicht mehr aus. Das Dichtsystem wurde leck. Es bildete sich ein Bypass für den Regenerator. Der Refrigerator konnte seine Funktion als Kältemaschine nicht mehr erfüllen.

Erfindungsgemäß wird vorgeschlagen, bei einem mit Helium als Arbeitsgas und bei tiefen Temperaturen betriebenen Refrigerator ein an sich aus der DE-U-88 16 254 bekanntes Dichtungssystem einzusetzen. Es besteht aus einer umlaufenden Nut im Verdränger, in der ein Dichtring aus PTFE und ein zumindest teilweise aus Silikonkautschuk, Poly-Urethan oder Tetrafluorethylen bestehender Vorspannring angeordnet sind. Die Werkstoffe Silikonkautschuk, Poly-Urethan oder Tetrafluorethylen behalten auch nach einer Abkühlung auf tiefe Temperaturen eine Rest-Elastizität, welche ausreicht, die gewünschte Vorspannkraft für den Dichtring zu erzeugen. Weiterhin haben diese Werkstoffe den unerwarteten Vorteil, daß sie in der Atmosphäre des Arbeitsgases Helium nicht verspröden. Schließlich sind sie hitzebeständig. Diese Vorteile sind im Hinblick auf Wartungsarbeiten an Refrigeratoren von Bedeutung. Sie werden häufig in der Weise ausgeführt, daß an die Stelle eines demontierten Refrigerator-Kaltkopfes ein Heißluftgebläse eingesetzt wird, um Kondensationen zu vermeiden. Nach durchgeführter Wartung werden Heißluftgebläse und Refrigerator-Kaltkopf wieder ausgetauscht. Dabei geschieht es, daß der Refrigerator zeitweise Temperaturen in der Größenordnung von mehr als 100° C annimmt.

Das Dichtungssystem mit diesen Merkmalen ist zwar aus der Gebrauchsmusterschrift DE-U-88 16 254 bekannt. Die beschriebenen Anwendungsgebiete betreffen jedoch die Hydraulik und Dosierkolben in einer Abfülleinrichtung für flüssige oder viskose Nahrungsmittel. Um Reinigungsprobleme bei Dosierkolben der genannten Art zu lösen, wird vorgeschlagen, dem Vorspannring (Pufferring) und dem Dichtring spezielle Querschnittskonturen zu geben.

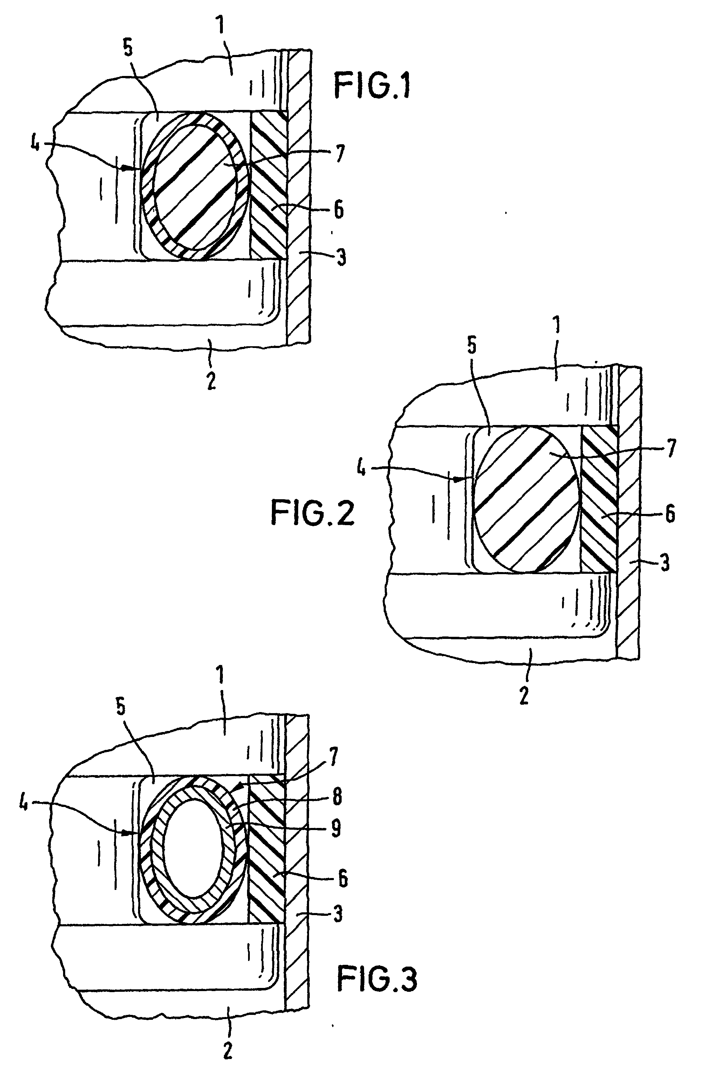

Weitere Vorteile und Einzelheiten der Erfindung sollen anhand von in den Figuren 1 bis 3 dargestellten Ausführungsbeispielen erläutert werden. Sie zeigen Längsteilschnitte durch einen Refrigerator in Höhe des Dichtungssystems.

In den Figuren sind der Verdränger mit 1, sein Arbeitsraum mit 2, das Gehäuse mit 3 und das Dichtsystem allgemein mit 4 bezeichnet. Es umfaßt die Nut 5 im Verdränger 1, den z.B. aus PTFE bestehenden Dichtring 6 und den der Erzeugung der Vorspannkraft dienenden Ring 7.

Der Ring 7 ist ein O-Ring und hat auch Dichtzwecke. Beim Ausführungsbeispiel nach Figur 1 umfaßt er einen Kern aus Silikonkautschuk oder Poly-Urethan mit einer Hülle aus z.B. PTFE. Die Ausführung des Ringes 7 nach Figur 2 besteht vollständig aus Silikonkautschuk oder Poly-Urethan.

Die folgenden Silikonkautschuk-Werkstoffe sind besonders geeignet:
- MVQ: Methyl-Vinyl-Silikon-Kautschuk
- MPVQ: Methyl-Phenyl-Vinyl-Silikon-Kautschuk
- MFQ: Fluorsilikon-Kautschuk
- MQ: Methyl-Silikon-Kautschuk

Als Poly-Urethan wird zweckmäßig ein gummielastisch vernetzendes Poly-Urethan verwendet, das unter der Produkt-Bezeichnung VULCULAN (Marke der Bayer AG) erhältlich ist.

Figur 3 zeigt eine Lösung, die insbesondere bei der Verwendung von Tetrafluorethylen geeignet ist. Der der Erzeugung der Vorspannkraft dienende Ring 7 umfaßt einen Schlauch 8 und eine in den Schlauch eingebettete Wendel 9 aus elastischem Metall. Die Elastizität der Metallwendel unterstützt die Elastizität des Schlauchwerkstoffes, so daß sie auch noch bei tiefen Temperaturen vorhanden ist.

## Patentansprüche

1. Dichtungsystem (4) für einen mit Helium als Arbeitsgas und bei tiefen Temperaturen betriebenen Refrigerator mit einem in einem Gehäuse (3) angeordneten Arbeitsraum (2), in dem ein Verdränger (1) während des Betriebs des Refrigerators eine Hin- und Herbewegung ausführt, wobei sich das Dichtungssystem (4) zwischen dem Verdränger (1) und der Innenwand des Gehäuses (3) befindet und aus einer umlaufenden Nut (5) im Verdränger (1), in der ein Dichtring (6) aus PTFE und ein zumindest teilweise aus Silikonkautschuk, Poly-Urethan oder Tetrafluorethylen bestehender Vorspannring (7) angeordnet sind, besteht.

2. Dichtungssystem nach Anspruch 1, **dadurch gekennzeichnet, daß** der Vorspannring (7) einen Silikonkautschuk-Kern aufweist, der mit einer PTFE-Schicht umhüllt ist.

3. Dichtungssystem nach Anspruch 1, **dadurch gekennzeichnet, daß** der Vorspannring (7) einen Poly-Urethan-Kern aufweist, der mit einer PTFE-Schicht umhüllt ist.

4. Dichtungssystem nach Anspruch 1, **dadurch gekennzeichnet, daß** der Vorspannring (7) vollständig aus Poly-Urethan oder Silikonkautschuk besteht.

5. Dichtungssystem nach Anspruch 1, **dadurch gekennzeichnet, daß** er einen Schlauch (8) umfaßt, in den eine Metallwendel (9) eingebettet ist.

6. Dichtungssystem nach Anspruch 5, **dadurch gekennzeichnet, daß** der Schlauch (8) aus Tetrafluorethylen besteht.

## Claims

1. A sealing system (4) for a refrigerator operated at low temperatures with helium as its working gas and having a working chamber (2) arranged in a housing (3), in which working chamber (2) a displacer (1) performs a to and fro movement during operation of the refrigerator, wherein the sealing system (4) is located between the displacer (1) and the inner wall of the housing (3) and consists of an encircling groove (5) in the displacer (1), in which groove (5) there are arranged a sealing ring (6) of PTFE and a pretension ring (7) consisting at least in part of silicone rubber, polyurethane or tetrafluoroethylene.

2. A sealing system according to claim 1, **characterised in that** the pretension ring (7) comprises a silicone rubber core, which is enveloped in a PTFE layer.

3. A sealing system according to claim 1, **characterised in that** the pretension ring (7) comprises a polyurethane core, which is enveloped in a PTFE layer.

4. A sealing system according to claim 1, **characterised in that** the pretension ring (7) consists in its entirety of polyurethane or silicone rubber.

5. A sealing system according to claim 1, **characterised in that** it comprises a hose (8) in which a metal helix (9) is embedded.

6. A sealing system according to claim 5, **characterised in that** the hose (8) consists of tetrafluoroethylene.

## Revendications

1. Système d'étanchéité (4) pour un réfrigérateur fonctionnant avec de l'hélium à titre de gaz de travail et à basses températures, comportant une chambre de travail (2) agencée dans un boîtier (3), dans laquelle un organe refouleur (1) exécute pendant le fonctionnement du réfrigérateur un mouvement de va-et-vient, le système d'étanchéité (45) se trouvant entre l'organe refouleur (1) et la paroi intérieure du boîtier (3) et étant constitué par une gorge (5) périphérique dans l'organe refouleur, dans laquelle sont agencées une bague d'étanchéité (6) en PTFE et une bague de précontrainte (7) au moins partiellement en caoutchouc de silicone, en polyuréthanne ou en tétrafluoroéthylène.

2. Système d'étanchéité selon la revendication 1, **caractérisé en ce que** la bague de précontrainte (7) présente un noyau de caoutchouc de silicone qui est entouré d'une couche de PIFE.

3. Système d'étanchéité selon la revendication 1, **caractérisé en ce que** la bague de précontrainte (7) présente un noyau de polyuréthanne qui est entouré d'une couche de PIFE.

4. Système d'étanchéité selon la revendication 1, **caractérisé en ce que** la bague de précontrainte (7) est entièrement en polyuréthanne ou en caoutchouc de silicone.

5. Système d'étanchéité selon la revendication 1, **caractérisé en ce qu'**il comprend un tuyau (8) dans lequel est noyée une spirale métallique (9).

6. Système d'étanchéité selon la revendication 5, **caractérisé en ce que** le tuyau (8) est en tétrafluoroéthylène.
